# EUROPÄISCHE PATENTSCHRIFT

(11) **EP 3 905 024 B1**
(45) Veröffentlichungstag und Bekanntmachung des Hinweises auf die Patenterteilung: **14.08.2024**
(21) Anmeldenummer: 20171731.1
(22) Anmeldetag: 28.04.2020
(51) Int. Cl.: G06F 3/12, G06Q 10/0631

(54) **DRUCKPRODUKTION MIT VARIANZREDUKTION**
PRINT PRODUCTION WITH VARIANCE REDUCTION
PRODUCTION D'IMPRIMÉS À RÉDUCTION DE LA VARIANCE

(43) Veröffentlichungstag der Anmeldung: 03.11.2021
(73) Patentinhaber: Heidelberger Druckmaschinen AG, 69115 Heidelberg (DE)
(72) Erfinder: Wagensommer, Bernhard, 69254 Malsch (DE); Wolf, Rainer, 70619 Stuttgart (DE); Kropp, Frank, 69256 Mauer (DE); Grasl, Gottfried, 74918 Angelbachtal (DE); Stahl, Dominic, 69256 Mauer (DE); Rößler, Georg, 74918 Angelbachtal (DE); Grimm, Jürgen, 60431 Frankfurt (DE)

(56) Entgegenhaltungen:
- US-B1- 6 321 133

## Beschreibung

Die vorliegende Erfindung betrifft ein Verfahren zur Herstellung von Druckerzeugnissen aus Anfragen von Druckaufträgen mittels wenigstens einem Rechner und wenigstens einer Produktionsmaschine, wobei dem wenigstens einen Rechner über wenigstens eine Schnittstelle Auftragsprognosen von zukünftigen Druckaufträgen zugeführt werden und wobei dem wenigstens einen Rechner über die wenigstens eine Schnittstelle Präferenzen einer Druckerei zugeführt werden.

Bei dem vorliegenden Verfahren geht es darum, den Druckprozess für Druckereien so zu optimieren, dass die Druckereien möglichst zu ihnen passenden Druckaufträge erhalten. Viele Druckereien tun sich schwer in der Einschätzung, welche Druckaufträge und Druckprodukte sie sinnvollerweise anbieten sollen und bieten dann entweder Druckprodukte an, welche sie nicht wirklich wirtschaftlich herstellen können oder lassen viele Gelegenheiten aus, Aufträge anzunehmen, aus Angst, dass sie diese wiederum nicht wirtschaftlich abarbeiten können. Vor diesem Hintergrund ist es Aufgabe der vorliegenden Erfindung, ein Verfahren zur Herstellung von Druckerzeugnissen aus Druckaufträgen zu schaffen, welches die Varianten einer Vielzahl von Anfragen von Druckaufträgen auf sinnvoll von einer Druckerei abarbeitbare Mengen einschränkt. Dabei werden insbesondere die technischen Möglichkeiten und Beschränkungen der Druckerei in Form des dort vorhandenen Maschinenparks, der dort vorhandenen Verbrauchsmaterialien aber auch der Fähigkeiten des Bedienpersonals berücksichtigt, das auf manche komplizierte und anspruchsvolle Druckaufträge speziell geschult werden muss.

Aus der Patentschrift US 6,321,133 B1 geht ein Verfahren zur hierarchischen Auftragssteuerung von Druckaufträgen hervor, bei dem sich die frühestmögliche vernünftige Abarbeitungszeit für ein oder mehrere zusätzliche Druckaufträge bestimmen lässt. Die Abfrage bei der Bestimmung des Zeitpunkts umfasst einen ersten Abfrageschritt bei der Erfassung der hierarchischen Planungsstruktur, um festzustellen, ob ein oder mehrere zusätzliche Druckjobs abgearbeitet werden können. Im Falle der Ablehnung wird eine umfassendere Abfrage getätigt. Auf diese Art und Weise kann dem Nutzer auf einem Bildschirm eine umfassende Struktur der Abarbeitung der Druckjobs angezeigt werden. Das Verfahren umfasst das regelmäßige Update eines Modells einer Druckereiumgebung. Auf diese Art und Weise lässt sich eine Vorhersage tätigen, wann der frühestmögliche Zeitpunkt für die Abarbeitung einer neuen Anfrage eines Druckauftrags möglich ist.

Erfindungsgemäß ist vorgesehen, dass der Rechner mittels eines Ausschlussfilters durch Vergleich von Präferenzen der Druckerei mit den Auftragsprognosen nicht passende Druckaufträge aussortiert und auf Basis der nicht ausgeschlossenen Druckaufträge Präferenzklassen für Druckaufträge erstellt, wobei dem Rechner über die wenigstens eine Schnittstelle Daten von Anfragen von Druckaufträgen zugespielt werden und der Rechner die Daten der Anfragen der Druckaufträge mit den berechneten Präferenzklassen der Druckaufträge vergleicht und nicht passende Anfragen der Druckaufträge aussortiert. Außerdem leitet der Rechner nur die übriggebliebenen, passenden Anfragen der Druckaufträge an die wenigstens eine Druckmaschine der Druckerei weiter. Die Druckerei kann dann diese Anfragen von Druckaufträgen als Bestellung annehmen und diese dann als Druckaufträge auf der Druckmaschine abarbeiten und herstellen.

Unter Auftragsprognosen sind gemäß der vorliegenden Erfindung Prognosen über zukünftige, zu erwartende Aufträge gemeint, während unter Präferenzen, die von der Druckerei zur Verfügung gestellten technischen, wirtschaftlichen und personellen Ressourcen gemeint sind. Weiterhin umfassen die Präferenzen auch die Kostenstruktur der Druckerei, denn es macht für eine Druckerei keinen Sinn, Druckaufträge anzunehmen, die sie zwar technisch abarbeiten, aber nicht wirtschaftlich herstellen kann. Das erfindungsgemäße technische Verfahren wird vorzugsweise auf einem Rechner mittels Software realisiert, wobei der Rechner zentral z.B. in Form einer Internetplattform oder dezentral angeordnet sein kann. Bei einer zentralen Anordnung kommuniziert der Rechner zweckmäßigerweise über eine Internetverbindung mit den angeschlossenen Teilnehmern einer oder mehrerer Druckereien. Weiterhin gibt es Schnittstellen auch zu Kunden, um die Anfragen von Druckaufträgen der Kunden einzusammeln und Daten über Auftragsprognosen zu erhalten. Der Rechner kann auch Teil einer Cloud basierten Plattformlösung im Internet sein und führt zunächst mittels eines Ausschlussfilters einen Vergleich der Präferenzen der Druckerei mit den Auftragsprognosen durch. Somit werden Druckaufträge der Auftragsprognosen, welche nicht mit den Präferenzen der Druckerei kompatibel sind, von vornherein aussortiert. Die auf dieser Basis nicht ausgeschlossenen Druckaufträge werden zur Erstellung von Präferenzklassen genutzt, welche alle nicht aussortierten Druckaufträge umfassen. Bei der Bildung von Präferenzklassen werden zudem Druckaufträge geclustert, d.h. ähnliche Druckaufträge, z.B. mit ähnlichen Bedruckstoffen, ähnlichen Farben oder ähnlichen Verarbeitungsschritten, werden unter Berücksichtigung von technisch sinnvollen Toleranzen, z.B. einer maximal zulässigen Abweichung bei der Grammatur des Bedruckstoffs in % oder g, in entsprechende Klassen geclustert. Dies reduziert die Anzahl der Präferenzklassen und macht so die Anwendung der Präferenzklassen auf zukünftige Druckaufträge besser handhabbar.

Dem Rechner können außerdem über eine Schnittstelle tatsächlich bestellte Druckaufträge oder für die Produktion schon vorgesehene Druckaufträge von Kunden zugeführt werden, welche der Rechner wiederum mit den Präferenzklassen der Druckaufträge vergleicht und hier nicht passende Präferenzklassen aussortiert. Die modifizierten Präferenzklassen werden dann auf die Anfragen von Druckaufträgen angewendet, und dann werden die übriggebliebenen, Anfragen von Druckaufträge werden nach Abschluss des Bestellprozess durch die jeweilige Druckerei als Druckaufträge an eine Produktionseinrichtung wie z.B. Druckvorstufe und Druckmaschine der Druckerei weitergeleitet, welche diese Druckaufträge abarbeitet. Auf diese Art und Weise wird sichergestellt, dass auf Basis der prognostizierten Druckaufträge, der tatsächlich zur Verarbeitung in der Druckerei angebotenen Druckaufträge und der von der Druckerei vorgegebenen Präferenzen die passenden Druckaufträge in der Druckerei abgearbeitet werden. Damit ist zum einen die technische Abarbeitung der Druckaufträge sichergestellt, da alle Druckaufträge machbar sind, und zudem wird eine wirtschaftlich sinnvolle Abarbeitung sichergestellt, da die Präferenzen von der Druckerei vorgegeben werden und diese die Präferenzen so wählen wird, dass sie keine wirtschaftlich sinnvollen Druckaufträge auf dem Markt verpassen.

In einer ersten Ausgestaltung der Erfindung ist vorgesehen, dass der Rechner in einem Angebotsoptimierer als passend bewertete Präferenzklassen nach der Häufigkeit von angebotenen Druckaufträgen bewertet und Präferenzklassen mit geringer Häufigkeit aussortiert. Dieser Verfahrensschritt wird zweckmäßigerweise nach Anwendung des Ausschlussfilters durchgeführt. Mittels dieses Verfahrensschritts kann die Druckerei selten vorkommende Präferenzklassen gezielt aussortieren. Dazu kann eine gewünschte Häufigkeit als Minimum, z.B. in Form von Prozentwerten, wie 10 % vorgegeben werden, so dass alle Präferenzklassen von Druckaufträgen mit einer geringeren Häufigkeit als 10 % aussortiert werden. Präferenzklassen von Druckaufträgen mit einer geringeren Häufigkeit lassen sich grundsätzlich nicht so wirtschaftlich verarbeiten wie Präferenzklassen mit einer größeren Häufigkeit, da eine geringere Häufigkeit bedeutet, dass häufige Druckauftragswechsel durchgeführt werden müssen. Präferenzklassen von Druckaufträgen mit einer größeren Häufigkeit umfassen dagegen entsprechend ihrer Ähnlichkeit zusammengefasste viele Druckaufträge, so dass mehrere Druckaufträge mit nur geringen Änderungen und Rüstzeiten hintereinander bedruckt werden können.

In einer weiteren Ausgestaltung der Erfindung ist vorgesehen, dass der Rechner in einem Auftragsoptimierer die als passend bewerteten Präferenzklassen mit anschließend zur Verarbeitung in der Druckerei anstehenden Druckaufträgen vergleicht und in Abhängigkeit des Vergleichsergebnisses überarbeitete Präferenzklassen berechnet. Der Schritt der Auftragsoptimierung wird sinnvollerweise entweder im Anschluss an das Ausschlussfilter oder im Anschluss an den Angebotsoptimierer durchgeführt. In diesem Fall findet ein Abgleich zwischen den zuvor als passend bewerteten Präferenzklassen und den tatsächlich zur Verarbeitung in der Druckerei zur Verarbeitung anstehenden Druckaufträgen statt, wobei in Abhängigkeit des Vergleichsergebnisses die Präferenzklassen für die Druckaufträge zusätzlich angepasst werden. Dies erhöht die Zielgenauigkeit der Clusterung in Präferenzklassen, da hier zusätzlich bei der Erstellung der Präferenzklassen die tatsächlich anstehenden Druckaufträge ebenfalls berücksichtigt werden. Auf diese Art und Weise werden die Präferenzklassen zuverlässig angepasst, falls eine zu große Diskrepanz zwischen Auftragsprognosen und tatsächlich aktuell angebotenen Druckaufträgen festgestellt würden.

In einer weiteren Ausgestaltung der vorliegenden Erfindung ist vorgesehen, dass die Präferenzen der Druckerei wenigstens eines der Merkmale wie Auslastung, Ausstattung mit Maschinen, Kostenstruktur der Druckerei und aktueller Vorrat an Verbrauchsmaterialien, enthalten. Je mehr dieser Merkmale in den Präferenzen vorhanden sind, desto präziser lassen sich die Präferenzklassen auf die tatsächlich zu der Druckerei passenden Druckaufträge anpassen, was wiederum bedeutet, dass die Druckerei aus den tatsächlich anstehenden Druckaufträgen zielgerichtet die zu ihr passenden Druckaufträge herausfiltert. Zu den Präferenzen der Druckerei zählen die technische Ausstattung in Form von Maschinen, die Auslastung der Druckerei, die Kostenstruktur der Druckerei und der aktuelle Vorrat an Verbrauchsmaterialien. Zusätzlich kann auch noch die Qualifikation des Bedienpersonals der Maschinen hinzugezogen werden, weil für manche Druckaufträge, insbesondere mit spezieller Veredelung, besondere Fähigkeiten des Bedienpersonals erforderlich sind.

Vorteilhafterweise ist außerdem vorgesehen, dass die Präferenzklassen für Druckaufträge wenigstens einen Parameter wie Format, Farben, Nachverarbeitung, Beschaffenheit des Bedruckstoffs, Druckverfahren, Druckauflage oder Produktklasse beinhalten. Um aus den anstehenden Druckaufträgen die passenden Aufträge mittels der Präferenzklassen herausfiltern zu können, müssen die Druckaufträge mit den Daten der Präferenzklassen verglichen werden. Hierbei spielen die Daten von Druckaufträgen wie Format, Farben, Nachverarbeitung, Beschaffenheit des Bedruckstoffs, Druckverfahren, Druckauflage oder Produktklasse eine erhebliche Rolle, wobei die Varianz dann so weiter abgesenkt und damit die Zielgenauigkeit erhöht wird, je mehr Parameter die Präferenzklassen enthalten.

Vorteilhafterweise ist außerdem vorgesehen, dass eine Produktklasse wiederum wenigstens durch ein Druckprodukt wie eine Visitenkarte, einen Flyer, ein Poster oder eine Medikamentenverpackung, charakterisiert wird. Auf diese Art und Weise gehen die gewünschten Druckprodukte in Form einer Produktklasse wiederum in die Präferenzklassen für Druckaufträge ein, so dass die Druckerei gezielt über die Berechnung der Präferenzklassen, insbesondere auch die zu ihr passenden Druckprodukte, zugeordnet bekommt.

Weiterhin ist vorgesehen, dass ein Druckprodukt durch wenigstens einen Parameter wie Bedruckstoff, Farbigkeit oder Nachbearbeitung beschrieben wird. Die Druckprodukte der Produktklassen werden wiederum durch die genannten Parameter näher beschrieben, so dass die Druckprodukte auch voneinander getrennt werden können und nur die von der Druckerei tatsächlich gewünschten Druckprodukte auch in die Produktklassen einfließen und diese wiederum die Präferenzklassen für die Druckerei passend beschreiben. Durch diese Stufenhierarchie werden die Präferenzklassen sukzessive zielgerichtet auf die Druckerei eingestellt und somit eine unnötige Varianz an Druckaufträgen vermieden.

Erfindungsgemäß ist vorgesehen, dass bei dem ersten Filterschritt unter Verwendung des Filters zum Ausschluss nicht passender Druckaufträge der Rechner in einem ersten Verfahrensschritt die Häufigkeit von Farbsätzen mit den Präferenzen der Druckerei vergleicht und in einem zweiten Schritt die Häufigkeit der eingesetzten Drucksubstrate mit den Präferenzen der Druckerei vergleicht. Der erste Filterschritt des Filters zum Ausschluss von Druckaufträgen wird hierbei in zwei Verfahrensschritte unterteilt, wobei zunächst die Häufigkeit von Farbsätzen mit den Präferenzen der Druckerei verglichen wird und die dann übriggebliebenen Druckaufträge in einem zweiten Schritt in Bezug auf die Häufigkeit der eingesetzten Drucksubstrate weiterhin mit den entsprechenden Präferenzen der Druckerei verglichen wird. Auf diese Art und Weise werden zielgerichtet die Präferenzen der Druckereien stufenweise mit den Auftragsprognosen verglichen und nicht passende Druckaufträge durch die beiden Verfahrensschritte im Filter zum Ausschluss der nicht passenden Druckaufträge aussortiert. Dieses Filter zum Ausschluss nicht passender Druckaufträge lässt sich noch dahingehend verfeinern, dass der Rechner in einem dritten Verfahrensschritt die Häufigkeit von Auflagehöhen mit den Präferenzen der Druckerei vergleicht. Selbstverständlich sind noch mehrere Schritte denkbar, dies kommt auf die Anzahl und Art der von der Druckerei vorgegebenen Präferenzen an. Je mehr Präferenzen die Druckerei vorgibt, desto mehr Verfahrensschritte werden in dem Filter zum Ausschluss nicht passender Druckaufträge umgesetzt, und desto mehr nicht passende Druckaufträge werden aus den Auftragsprognosen aussortiert. Dabei ist allerdings zu beachten, dass nicht zu viele, insbesondere möglicherweise im Widerspruch stehende Präferenzen von der Druckerei vorgegeben werden dürfen, da sonst am Ende fast alle Druckaufträge aussortiert werden und möglicherweise sich sogar eine leere Menge ergibt. Es ist daher wichtig, dass die Druckerei sinnvolle Präferenzen zur Verfügung stellt.

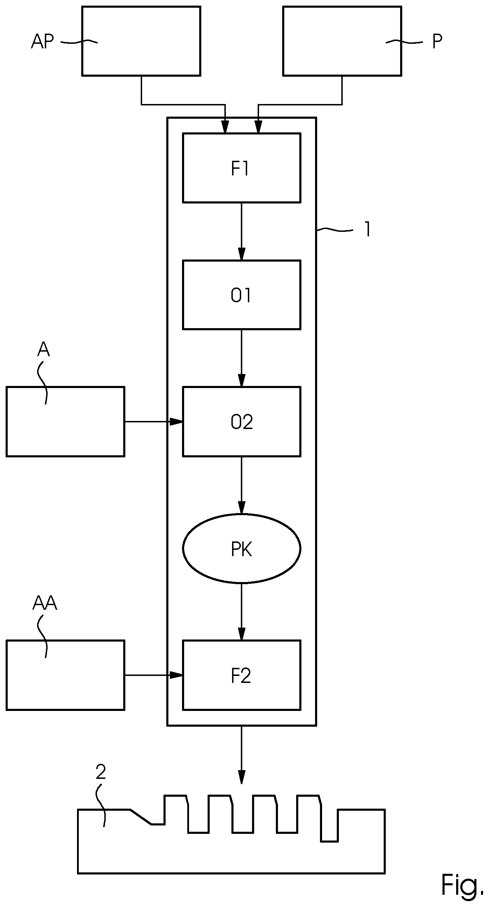

Die vorliegende Erfindung wird nachfolgend anhand einer Figur näher beschrieben und erläutert. Die Figur zeigt:
Ein Flussdiagramm des auf einem Rechner ablaufenden erfindungsgemäßen Verfahrens unter Verwendung eines Rechners und einer Druckmaschine in einer Druckerei.

Die Verwendung von einem Rechner 1 und einer Druckmaschine 2 dient hier lediglich zur vereinfachten Darstellung der vorliegenden Erfindung. In der Praxis lässt sich das Verfahren insbesondere auf einem zentralen Rechner 1, welcher sich auch in der Cloud des Internets befinden kann, verwirklichen, es sind dann entsprechend viele Schnittstellen auch zu mehreren Druckereien und mehreren Druckmaschinen 2 vorhanden. Auch sind weitere Produktionsmaschinen 2 wie Druckvorstufen, Druckplattenbelichter und Maschinen zur Weiterverarbeitung einbindbar. Zum Verständnis der vorliegenden Erfindung ist die Anzahl der Druckmaschinen 2 und die Art der Produktionsmaschinen jedoch nicht relevant.

Dem Rechner 1 werden in der Figur über zwei Schnittstellen auf der einen Seite Prognosen für Druckaufträge AP und Präferenzen P einer Druckerei zugeführt. Prognosen für Druckaufträge AP beruhen dabei zum einen auf in der Vergangenheit erkannten Gesetzmäßigkeiten und zum anderen auf der Berücksichtigung der aktuellen tatsächlichen Randbedingungen. Die Präferenzen P der Druckerei werden von der Druckerei selbst vorgegeben und umfassen Parameter und Merkmale, mit denen ein Druckauftrag A charakterisiert werden kann. Weiterhin umfassen diese Präferenzen P den Fertigungsprozess von Druckprodukten, welchen die Druckerei anhand ihres Maschinenparks, ihrer Kostenstruktur und der Fähigkeiten des Bedienpersonals zur Verfügung stellt. In dem Rechner 1 wird dann mittels eines Ausschlussfilters F1 ein erster Vergleich durchgeführt, bei dem die Daten der Druckaufträge aus der Prognose für Druckaufträge AP mit den Daten der Präferenzen P der Druckerei verglichen werden. Nicht passende Druckaufträge A werden dann in dem Ausschlussfilter F1 aussortiert und aus den verbliebenen Druckaufträgen A werden erste Präferenzklassen erstellt.

Anschließend werden die erstellten Präferenzklassen PK einem Angebotsoptimierer O1 zugeführt. Dieser Angebotsoptimierer O1 sortiert die Präferenzklassen in Bezug auf die häufiger vorkommenden Angebote von Druckaufträgen. Hier kann von der Druckerei eine gewünschte Mindesthäufigkeit vorgegeben werden, so dass wiederum alle Präferenzklassen PK, welche dieser gewünschten Mindesthäufigkeit nicht entsprechen, aussortiert werden. Anschließend gelangen die wiederum nicht aussortierten Präferenzklassen PK in einen Auftragsoptimierer O2. Hier findet ein Abgleich der bisher nicht aussortierten Präferenzklassen PK mit tatsächlich bereits in der Druckerei anstehenden Druckaufträgen A statt. Die hierbei nicht in Übereinstimmung stehenden Präferenzklassen PK werden wiederum aussortiert. Die nun übriggebliebenen Präferenzklassen PK werden dann wiederum beim Auftragsvergleich F2 mit Anfragen von Druckaufträgen AA verglichen und die dabei übriggebliebenen Anfragen von Druckaufträge AA werden elektronisch an die Druckerei weitergeleitet. In der Druckerei kann dann bevorzugt über ein Softwaremenü über diese Anfragen von Druckaufträgen AA entschieden werden. Die angenommenen Anfragen von Druckaufträgen AA werden dann als Druckaufträge A angenommen und an die Produktionsmaschinen der Druckerei wie z.B. die Druckmaschine 2 weitergeleitet.

Auf diese Art und Weise wird die Varianz von Druckaufträgen A, welche auf der Druckmaschine 2 abgearbeitet werden, auf das von der Druckerei gewünschte Maß reduziert, so dass nur die sinnvollen oder besonders wirtschaftlich von der Druckerei tatsächlich abzuarbeitenden Druckaufträge A auch auf der Druckmaschine 2 abgearbeitet werden. Hiermit findet eine Optimierung der Abarbeitung von Druckaufträgen A auf der Druckmaschine 2 unter Berücksichtigung der tatsächlich anstehenden Druckaufträge A, der Prognosen für Druckaufträge AP, der Anfragen von Druckaufträgen AA und der Präferenzen P einer Druckerei statt.

### Bezugszeichenliste

- 1: Rechner
- 2: Druckmaschine
- F1: Ausschlussfilter
- F2: Auftragsvergleich
- O1: Angebotsoptimierer
- O2: Auftragsoptimierer
- A: Druckaufträge
- AA: Anfragen von Druckaufträgen
- AP: Prognose für Druckaufträge
- P: Präferenzen einer Druckerei
- PK: Präferenzklassen

## Patentansprüche

1. Verfahren zur Herstellung von Druckerzeugnissen aus Anfragen von Druckaufträgen (AA) mittels wenigstens einem Rechner (1) und wenigstens einer Produktionsmaschine (2),
wobei dem wenigstens einen Rechner (1) über wenigstens eine Schnittstelle Auftragsprognosen (AP) von zukünftigen Druckaufträgen zugeführt werden, wobei dem wenigstens einen Rechner (1) über die wenigstens eine Schnittstelle Präferenzen (P) einer Druckerei zugeführt werden, wobei die Präferenzen (P) die von der Druckerei zur Verfügung gestellten technischen, wirtschaftlichen und personellen Ressourcen umfassen,
**wobei** der wenigstens eine Rechner (1) mittels eines Ausschlussfilters (F1) durch Vergleich der Präferenzen (P) der Druckerei mit den Auftragsprognosen (AP) von zukünftigen Druckaufträgen nicht passende zukünftige Druckaufträge aussortiert und auf Basis der nicht ausgeschlossenen zukünftigen Druckaufträge Präferenzklassen (PK) für zukünftige Druckaufträge erstellt, wobei die Präferenzklassen (PK) die nicht ausgeschlossenen, zukünftigen Druckaufträge umfassen, wobei dem wenigstens einen Rechner (1) über die wenigstens eine Schnittstelle Daten von Anfragen von Druckaufträgen (AA) zugeführt werden, wobei der wenigstens eine Rechner (1) die Daten der Anfragen von Druckaufträgen (AA) mit den berechneten Präferenzklassen (PK) der zukünftigen Druckaufträge vergleicht und nicht passende Anfragen von Druckaufträgen (AA) aussortiert,
wobei der wenigstens eine Rechner (1) nur die übrig gebliebenen, passenden Anfragen von Druckaufträgen (AA) an die wenigstens eine Produktionsmaschine (2) der Druckerei weiterleitet, welche die Anfragen von Druckaufträgen (AA) als Druckaufträge (A) annimmt und auf der wenigstens einen Produktionsmaschine (2) abarbeitet und herstellt, und
**wobei** bei dem ersten Filterschritt unter Verwendung des Filters zum Ausschluss (F1) nicht passender Druckaufträge der wenigstens eine Rechner (1) in einem ersten Verfahrensschritt die Häufigkeit von Farbsätzen mit den Präferenzen (P) der Druckerei vergleicht und in einem zweiten Schritt die Häufigkeit der eingesetzten Drucksubstrate mit den Präferenzen (P) der Druckerei vergleicht.

2. Verfahren nach Anspruch 1,
**wobei** der wenigstens eine Rechner (1) in einem Angebotsoptimierer (O1) als passend bewertete Präferenzklassen (PK) nach der Häufigkeit von angebotenen Druckaufträgen bewertet und Präferenzklassen (PK) mit geringer Häufigkeit aussortiert.

3. Verfahren nach Anspruch 1 oder 2,
**wobei** der wenigstens eine Rechner (1) in einem Auftragsoptimierer (02) die als passend bewerteten Präferenzklassen (PK) mit zur Verarbeitung in der Druckerei anstehenden Druckaufträgen (A) vergleicht und in Abhängigkeit des Vergleichsergebnisses überarbeitete Präferenzklassen (PK) berechnet.

4. Verfahren nach einem der vorhergehenden Ansprüche,
**wobei** die wenigstens eine Schnittstelle des wenigstens einen Rechners (1) Netzwerkverbindungen zum Internet oder Intranet sind.

5. Verfahren nach einem der vorhergehenden Ansprüche,
**wobei** die Präferenzen (P) der Druckerei wenigstens eines der Merkmale wie Auslastung, Ausstattung mit Maschinen (2), Kostenstruktur der Druckerei und aktueller Vorrat an Verbrauchsmaterialien enthalten.

6. Verfahren nach einem der vorhergehenden Ansprüche,
**wobei** die Präferenzklassen (PK) für Druckaufträge(A) wenigstens einen Parameter wie Format, Farben, Nachverarbeitung, Beschaffenheit des Bedruckstoffs, Druckverfahren, Druckauflage oder Produktklasse beinhalten.

7. Verfahren nach Anspruch 6,
**wobei** eine Produktklasse wenigstens ein Druckprodukt wie eine Visitenkarte, Flyer, Poster oder Medikamentenverpackung umfasst.

8. Verfahren nach Anspruch 7,
**wobei** ein Druckprodukt durch wenigstens einen Parameter wie Bedruckstoff, Farbigkeit oder Nachverarbeitung beschrieben wird.

9. Verfahren nach einem der vorhergehenden Ansprüche,
**wobei** der wenigstens eine Rechner (1) in einem dritten Verfahrensschritt die Häufigkeit von Auflagehöhen mit den Präferenzen (P) der Druckerei vergleicht.

## Claims

1. Method for producing printed products from requests for print jobs (AA) by means of at least one computer (1) and at least one production machine (2), wherein job forecasts (AP) of future print jobs are supplied to the at least one computer (1) via at least one interface, wherein preferences (P) of a printing company are supplied to the at least one computer (1) via the at least one interface, wherein the preferences (P) comprise the technical, economic and personnel resources made available by the printing company,
**wherein** the at least one computer (1) eliminates unsuitable future print jobs by means of an exclusion filter (Fl) by comparing the preferences (P) of the print shop with the job forecasts (AP) of future print jobs and creates preference classes (PK) for future print jobs on the basis of the non-excluded future print jobs, wherein the preference classes (PK) comprise the non-excluded future print jobs, wherein the at least one computer (1) is supplied via the at least one interface with data of requests for print jobs (AA), wherein the at least one computer (1) compares the data of the requests for print jobs (AA) with the calculated preference classes (PK) of the future print jobs and eliminates unsuitable requests for print jobs (AA),
wherein the at least one computer (1) forwards only the remaining suitable requests for print jobs (AA) to the at least one production machine (2) of the print shop, which accepts the requests for print jobs (AA) as print jobs (A) and processes and produces them on the at least one production machine (2), and
**wherein** in the first filtering step, using the filter for excluding (Fl) unsuitable print jobs, the at least one computer (1) compares the frequency of coloring sets with the preferences (P) of the print shop in a first process step and compares the frequency of the printing substrates used with the preferences (P) of the print shop in a second step.

2. Method according to claim 1,
**wherein** the at least one computer (1) evaluates preference classes (PK) evaluated as suitable in an offer optimizer (01) according to the frequency of offered print jobs and eliminates preference classes (PK) with a low frequency.

3. Method according to claim 1 or 2,
**wherein** the at least one computer (1) compares the preference classes (PK) evaluated as suitable in a job optimizer (O2) with print jobs (A) waiting to be processed in the print shop and calculates revised preference classes (PK) as a function of the comparison result.

4. Method according to one of the previous claims,
**wherein** the at least one interface of the at least one computer (1) are network connections to the Internet or Intranet.

5. Method according to one of the previous claims,
**wherein** the preferences (P) of the print shop include at least one of the characteristics such as workload, equipment with machines (2), cost structure of the print shop and current stock of consumables.

6. Method according to one of the previous claims,
**wherein** the preference classes (PK) for print jobs (A) include at least one parameter such as format, colors, finishing, nature of the substrate, printing process, print run or product class.

7. Method according to claim 6,
**wherein** a product class comprises at least one printed product such as a business card, flyer, poster or medicine packaging.

8. Method according to claim 7,
**wherein** a printed product is described by at least one parameter such as substrate, color or finishing.

9. Method according to one of the previous claims,
**wherein** the at least one computer (1) compares the frequency of print volumes with the preferences (P) of the printing company in a third method step.

## Revendications

1. Procédé de réalisation de produits d'impression à partir de demandes de travaux d'impression (AA) au moyen d'au moins un ordinateur (1) et d'au moins une machine de production (2), pour lequel des pronostics de travaux (AP) pour de futurs travaux d'impression sont transmis à l'ordinateur (1) au moins par l'intermédiaire d'une interface au moins, des préférences (P) d'une imprimerie étant transmises à l'ordinateur (1) au moins par l'intermédiaire de cette interface au moins, et les préférences (P) comprenant les ressources techniques, économiques et personnelles mises à disposition par l'imprimerie,
**pour lequel** l'ordinateur (1) au moins élimine, au moyen d'un filtre d'exclusion (F1), par comparaison des préférences (P) de l'imprimerie avec les pronostics de travaux (AP) de futurs travaux d'impression, les futurs travaux d'impression qui ne sont pas appropriés et établit, sur la base des futurs travaux d'impression non exclus, des catégories de préférences (PK) pour les futurs travaux d'impression, des données de demandes de travaux d'impression (AA) étant transmises à l'ordinateur (1) au moins par l'intermédiaire de l'interface au moins, l'ordinateur (1) au moins comparant les données des demandes de travaux d'impression (AA) aux catégories de préférences (PK) calculées des futurs travaux d'impression et éliminant les demandes de travaux d'impression (AA) qui ne sont pas appropriées,
**pour lequel** l'ordinateur (1) au moins ne transmet que les demandes de travaux d'impression (AA) restantes et appropriées à la machine de production (2) au moins de l'imprimerie, qui réceptionne les demandes de travaux d'impression (AA) comme travaux d'impression (A) et les traite et les réalise sur la machine de production (2) au moins et
**pour lequel,** lors de la première étape de filtrage, en utilisant le filtre d'exclusion (Fl) des travaux d'impression non adaptés, l'ordinateur (1) au moins compare, dans une première étape du procédé, la fréquence des jeux d'encrage avec les préférences (P) de l'imprimerie et, dans une deuxième étape, la fréquence des supports d'impression utilisés avec les préférences (P) de l'imprimerie.

2. Procédé selon la revendication 1,
**pour lequel** l'ordinateur (1) au moins évalue dans un optimiseur d'offre (01) des catégories de préférence (PK) considérées comme appropriées en fonction de la fréquence des travaux d'impression proposés et élimine les catégories de préférence (PK) présentant une faible fréquence.

3. Procédé selon la revendication 1 ou 2,
**pour lequel** l'ordinateur (1) au moins évalue dans un optimiseur d'offre (01) des catégories de préférence (PK) considérées comme appropriées en fonction de la fréquence des travaux d'impression proposés et élimine les catégories de préférence (PK) présentant une faible fréquence.

4. Procédé selon l'une des revendications précédentes,
**pour lequel** l'interface au moins de l'ordinateur (1) au moins est constituée par des connexions de réseau à Internet ou à un Intranet.

5. Procédé selon l'une des revendications précédentes,
**pour lequel** les préférences (P) de l'imprimerie incluent au moins une des caractéristiques telles que capacité, équipement en machines (2), structure des coûts de l'imprimerie et stock actuel de consommables.

6. Procédé selon l'une des revendications précédentes,
**pour lequel** les catégories de préférences (CP) pour les travaux d'impression (A) incluent au moins un paramètre tel que format, couleurs, finition, nature du support d'impression, procédé d'impression, tirage ou catégorie de produit.

7. Procédé selon la revendication 6,
**pour lequel** une catégorie de produits inclut au moins un produit imprimé tel que carte de visite, dépliant, affiche ou emballage de médicament.

8. Procédé selon la revendication 7,
**pour lequel** un produit d'impression est décrit par au moins un paramètre tel que support d'impression, couleurs ou post-traitement.

9. Procédé selon l'une des revendications précédentes,
**pour lequel** l'ordinateur (1) au moins un compare, dans une troisième étape du procédé, la fréquence des tirages avec les préférences (P) de l'imprimerie.
